# EUROPEAN PATENT SPECIFICATION

(11) **EP 0 279 865 B1**
(45) Date of publication and mention of the grant of the patent: **19.05.1993**
(21) Application number: 87905791.7
(22) Date of filing: 04.09.1987
(51) Int. Cl.: G01W 1/17, G01K 17/00

(54) **TEMPERATURE SENSING ELEMENT**
TEMPERATURFÜHLERELEMENT
ELEMENT THERMOCAPTEUR

(30) Priority: 05.09.1986 JP 210064/86
(43) Date of publication of application: 31.08.1988
(73) Proprietor: DAIKIN INDUSTRIES, LIMITED, Osaka-shi, Osaka-fu 530 (JP)
(72) Inventor: KOBAYASHI, Masahiro Kanaoka Factory, 1304, Kanaoka-cho, Sakai-shi Osaka 591 (JP); KOBAYASHI, Noboru Kanaoka Factory, 1304, Kanaoka-cho, Sakai-shi Osaka 591 (JP); SHIGEMORI, Kazuhisa Kanaoka Factory, 1304, Kanaoka-cho, Sakai-shi Osaka 591 (JP)
(74) Representative: Brooke-Smith, Fred
(86) International application number: PCT/JP87/00661
(87) International publication number: WO 88/01728

(56) References cited:
- EP-A- 0 073 858
- EP-A- 0 214 294
- DE-A- 1 798 439
- DE-A- 3 611 084
- JP-A-53 107 875
- JP-A-56 128 413
- JP-A-61 181 916
- US-A- 3 954 007
- US-A- 4 504 157
- PATENT ABSTRACTS OF JAPAN vol. 6, no. 2 (P-96)(880) 08 January 1982, & JP-A-56 128413 (SHOWA DENKO K.K.) 07 October 1981,

## Description

This invention relates to a thermal environment sensor used for controlling an air condition and more particularly the sensor so as to detect an effective temperature by compensating according to the wind velocity.

Conventionally, an air conditioner controls an air blowing temperature and the like based on only an air temperature measured by thermistor or the like. However, it is well known that the effective temperature human body feels is varied depending on the wind velocity. For example, Fig. 12 shows that the rate of a decrease in the effective temperature increases depending upwardly on the wind velocity. Therefore controlling of the air conditioner considering the influence of the wind velocity as well as the air temperature is more expected.

For this purpose, there is a well-known technique to control the air conditioner considering the wind velocity by measuring not only the the air temperature with a temperature detector but also the wind velocity with a thermal wind velocity sensor.

In this case, however, it requires both the wind velocity sensor and the temperature detector, moreover a circuit for estimating the wind velocity from heat loss, a temperature measuring instrument for compensating, a calculating circuit for calculating the effective temperature compensated according to the air temperature by the wind velocity, and the like are also required. As a result, the device is necessarily complicated.

DE-A-1798439 discloses a thermal environment sensor comprising four resistors arranged in a bridge across which a constant voltage is applied. One of the resistors is subjected to radiant heat from a heating coil across which an adjustable voltage is applied to cause the heating coil to give out a predetermined quantity of heat to the coil. The resulting change in the voltage across the resistor is used to derive a voltage across the bridge the size of which provides a corrected temperature.

US-A-4504157 discloses the use of two types of temperature compensated thermal environment sensor. In the first type constant temperature type, a wind-chill effect is detected by a voltage caused by a current used to maintain constant the temperature measured by the sensor. Thus, when three of four variables affecting the comfort of an individual are constant, the fourth can be estimated. The second type detects one of four variables, for example wind velocity, by measuring a change of temperature between heater temperature and ambient temperature when the heater is heated by a constant current.

An object of this invention is to detect the effective temperature compensated according to the wind velocity with a simple arrangement in the manner that temperature of a heating element having the same wind velocity dependence of the temperature drop as that of the effective temperature drop not through the process of estimating the wind velocity from heat loss by the wind as in a case using a thermal wind velocity sensor or the like but through measuring the wind velocity directly.

To attain this object, we provide a temperature detector, heating means for heating said temperature detector, and an electric power means for supplying a constant electric power to the heating means determined by the convective heat transfer coefficient of said temperature detector so that the wind velocity dependence of the temperature drop of the temperature detector closely conforms to that of the effective temperature drop of human body. Then, it is so arranged as to detect the effective temperature Tv of human body which is the air temperature Ta compensated according to the wind velocity Vb from the temperature Tg measured by the temperature detector.

In other words, a compensating constant C calculated from formula (1) below is set by previously measuring a finally achieved temperature Tgb of the temperature detector at the standard wind velocity (for example 0.1m/s) under the condition of the ambient air temperature.

$\text{C = Tgb - Ta (1)}$

Since this compensating constant C is settled constant without depending on the air temperature Ta, the effective temperature of the human body considering an air temperature and the wind velocity of the environment by next formula (2) is calculated.

$\text{Tv = Tg - C (2)}$

In other words, the effective temperature Tv considering the air temperature and the wind velocity is detected by subtracting constant C, which is experimentally determined, from the temperature Tg of the temperature detector when heated by a certain electric power.

According to this arrangement, the effective temperature compensated according to the wind velocity Vb is detected by measuring the temperature of the temperature detector, since the wind velocity dependence of the temperature drop of the temperature detector is closely conformed to that of the effective temperature drop of human body, when the temperature detector is heated with a certain electric power by the electric power supplying means. Therefore, the effective temperature considering the air temperature Ta and the wind velocity Vb is detected with a simple arrangement of single temperature detector and simple circuits.

According to this invention, the effective temperature considering the air temperature and the wind velocity is detected with a simple composition and a comfortable air condition can be derived. In the manner that the effective temperature compensated according to the wind velocity is detected through a measured temperature of the temperature detector which is heated with the heating means for heating the temperature detector by supplying a certain electric power that is determined by a convective heat transfer coefficient of the temperature detector from the power supplying means, wherein the wind velocity dependence of the temperature drop of the temperature detector is closely conformed to that of the effective temperature drop of human body.

Concretely, when various controls in the air conditioner, for example, a control of a blow-off temperature, a blow-off direction, or a capacity control of compressor when a variable capacity type compressor is equipped therein, precise control considering the effective temperature can be achieved.

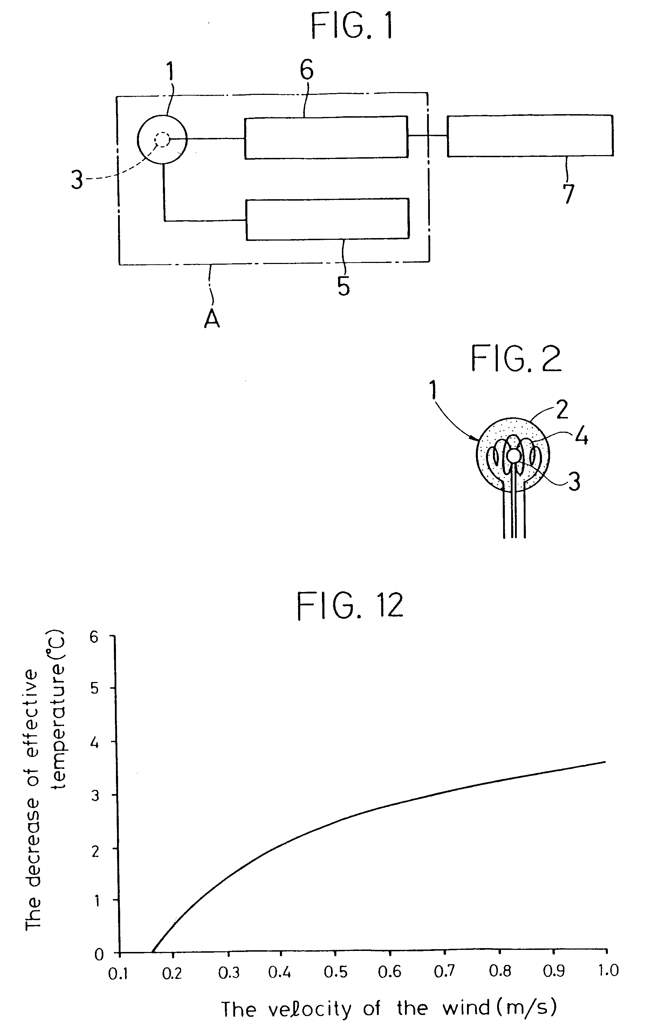

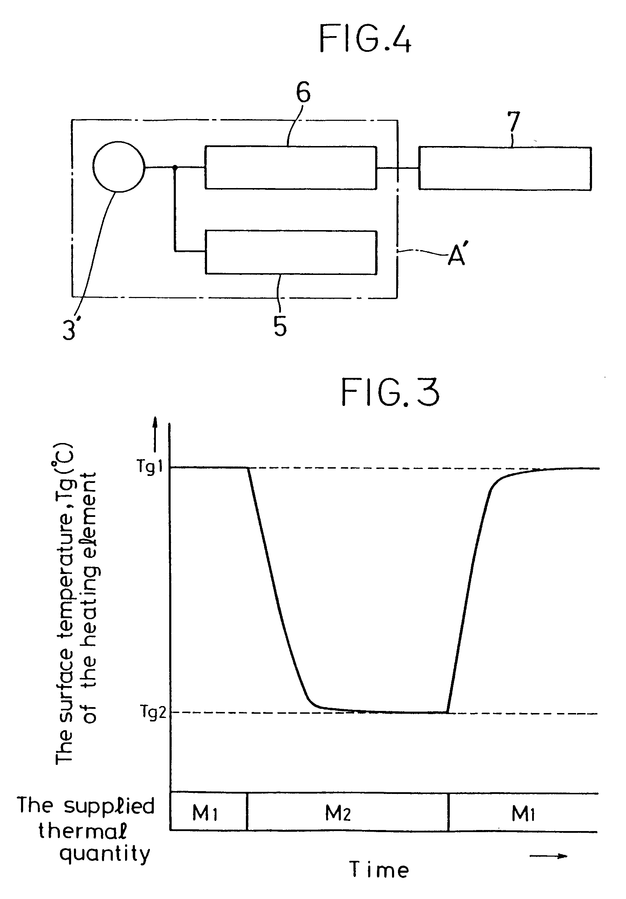

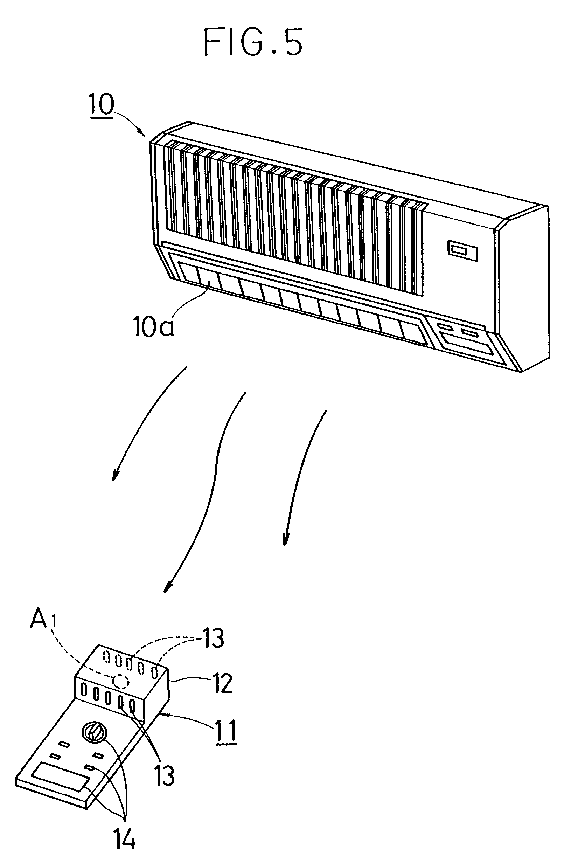

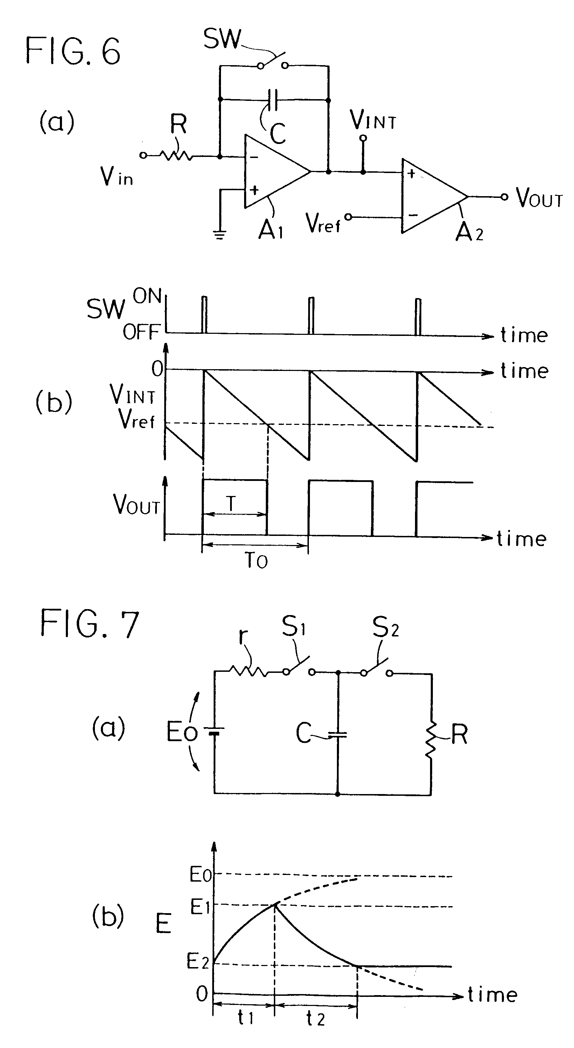

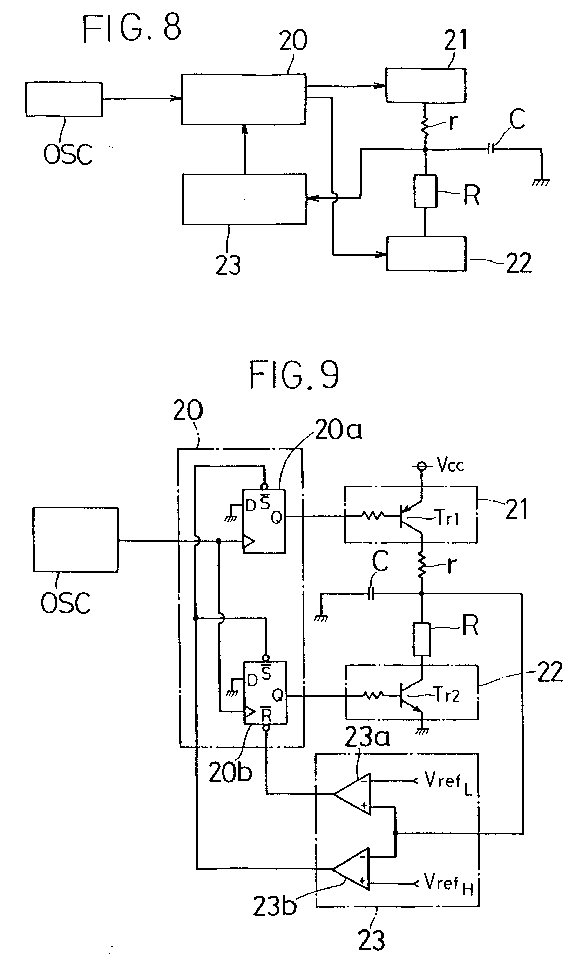

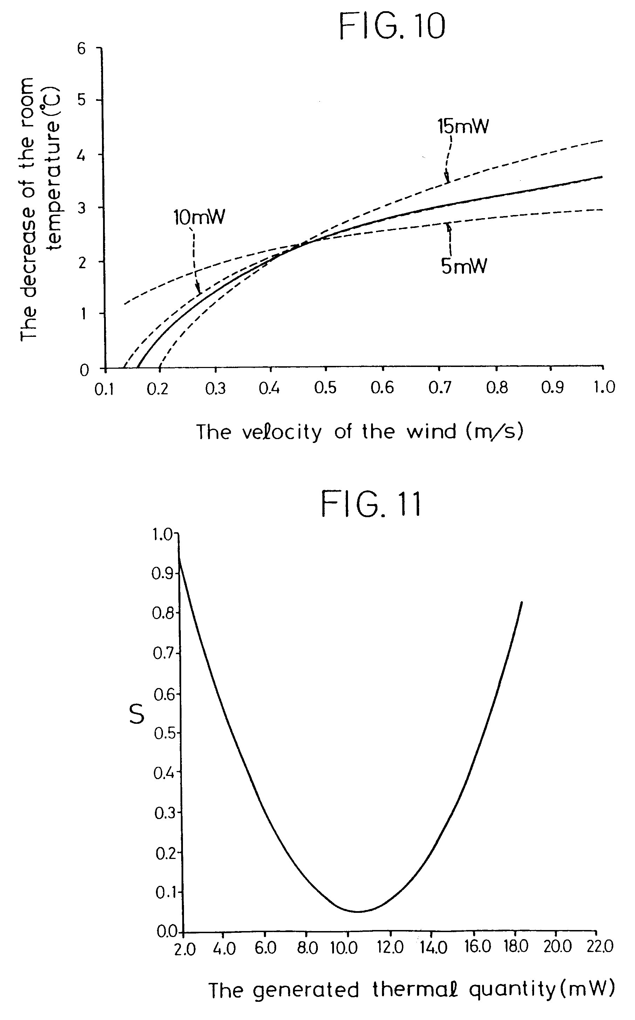

Fig.1 is a block diagram roughly showing a circuit arrangement connected with a thermal environment sensor in this invention, and Fig.2 is a schematic vertical section showing a rough composition of the thermal environment sensor. Fig.3 is a graphical representation for explaining the process to detect the absolute value of the wind velocity. Fig.4∼Fig.9 show another embodiment, wherein Fig.4 is a block diagram equivalent to Fig.1, Fig.5 is a rough perspective view when various controls for air conditioning is done with a thermal environment sensor equipped to a remote controller of the air conditioner, Fig.6(a), (b) are a wiring diagram and a wave form chart showing a principle of a control system under constant electric power supplied to a thermistor with an analog multiplier for the thermal environment sesnor of self-heating type, Fig.7(a), (b) are a wiring diagram and a wave form chart showing a principle of a driving system under a constant power supply with a constant energy, with the same analog multiplier, Fig.8 is a block diagram showing a circuit arrangement, and Fig.9 is a detail circuit diagram thereof. Fig.10 is a graphical representation showing a variation of the temperature drop according to the wind velocity when a heat quantity of the temperature detector is changed in a concrete embodiment. Fig.11 is a graphical presentation showing a characteristics in the same way when an optimum heat quantity of the temperature detector is determined. Fig.12 is a graphical representation showing the effective temperature drop of human body according to the wind velocity.

Best mode for carrying out of this invention will now be explained as an enbodiment with reference to the drawings.

Fig.1 shows a rough arrangement of a thermal environment sensor(A) of this invention used for an air conditioner, wherein the sensor(1) comprises a sphere-shaped electric insulation(2) as shown in Fig.2. The temperature detector(3) and the heater(4) as a heating means for heating the temperature detector(3) by supplying electric power disposed around the temperature detector(3) are enclosed with the sphere-shaped electric insulation(2).

The heater(4) is connected with a constant-power circuit (5) adapted as an electric power supplying means. The temperature detector(3) is to be heated in the manner that the heater(4) is thereby supplied with a certain electric power that is determined by the convective heat transfer coefficient of the temperature detector(3) so that the wind velocity dependence of the temperature drop of the temperature detector(3) is closely conformed to that of the effective temperature drop of human body.

Furthermore, an output signal from the temperature detector(3) is put into a temperature estimating circuit(6), and output signal therefrom is put into a controlling circuit(7) of an air conditioner for controlling an operation of the air conditioner (not shown). The effective temperature Tv which is the compensated value of the air temperature Ta according to the wind velocity Vb is estimated from detected temperature Tg of the temperature detector(3) when heated by the heater(4) with predetermined electric power at the temperature estimating circuit(6).

Therefore, in the case of above mentioned embodiment, the constant electric power is supplied to the heater(4) by the constant-power circuit(5), and the temperature detector(3) is heated by the heater(4). The constant electric power supplied to the heater(4) from the constant-power cercuit(5) is determined by the convective heat transfer coefficient of the temperature detector(3) so that the wind velocity dependence of the temperature drop of the temperature detector(3) is closely conformed to that of the effective temperature drop of human body. For this reason, the effective temperature Tv compensated according to the wind velocity Vb is estimated from the detected temperature Tg of the temperature detector(3) by the temperature estimating circuit(6). Therefore the effective temperature considering the air temperature Ta and the wind velocity Vb can be derived with a simple arrangement provided with single temperature detector(3), the constant-power circuit(5) and the temperature estimating circuit(6).

In case of abovementioned embodiment, an absolute value of the wind velocity cannot be estimated. However as Fig.3 shows, when the temperature detector(3) is intermittently heated by the heater(4), it is possible to estimate not only the effective temperature Tv but also the wind velocity Vb.

Namely, when heat quantities (supplying heat quantities) supplied to the temperature detector(3) are M₁, M₂ ; its convective heat transfer coefficient is hc; the temperatures of the temperature detector(3) are Tg₁, Tg₂; the air temperature is Ta; and the absolute value of the wind velocity is V, the heat quantities M₁, M₂ are represented by :

$\text{M₁ = hc (Tg₁ - Ta) (3)}$

$\text{M₂ = hc (Tg₂ - Ta) (4)}$

Both expressions (3), (4) can be translated to:

$\text{hc = (M₁ - M₂)/(Tg₁ - Tg₂) (5)}$

$\text{V = f (hc) (6)}$

Accordingly, when the relation of said expression (6) is experimentally predetermined, the absolute value of the wind velocity V can be determined by the expression (5), (6).

Also, such a thermal environment sensor(A) may be joined with a humidity sensor or radiation sensor to control the air conditioiner.

Further, in above mentioned embodiment the temperature sensor(3) is heated by heater(4). However, as shown in Fig.4, when the temperature detector(3) is also adapted for a heating means by using a self-heated element, a heater(4) (means for heating) such as in abovementioned embodiment is not required and an arrangement for equipment is more simplified, especially, it makes the air conditioner effectively remote-controled.

As shown in Fig.5, for example, a thermal environment sensor(A') is built in a casing(12) of a remote-controller(11) for controlling an operation of the air condition(10), wherein the casing(12) of the remote-controller(11) has opening slits(13), (13),^{...} for air flow. Various kinds of operating keys(14), (14), ^{...} for controlling may be operated with a condition that remote controller(11) is arranged so that the thermal environment sensor(A') is touched with an air flow blown from an air blow-off port (10a) of the air conditioner(10) through the slits(13), (13),^{...}.

As abovementioned self-heated temperature detector(3'), there are a thermistor, a diode, a metallic registor made of a platinum and the like, or a transistor, FET, and so on.

Hereinafter, a precise arrangement is explained in a case when the temperatue detector(3') of the abovementioned self-heated type is used.

As a method of using this self-heating type, there are two methods:
(**I**) A method to estimate an equivalent effective temperature from the temperature of the detector (this changes in dependance with each condition of the air temperature, the radiation, the wind velocity and so on.) when the constant electric power is supplied to the thermistor or the like (constant-power method)
(**II**) A method to estimate the effective temperature from an electric quantity added so as to heat the detector in a certain temperature higher than the air temperature.

In the latter method (**II**) of these case, overshoot, hunching and so on are easy to occur only with a usual proportional controller, and PI control or PID control is required, since a thermal time constant of the thermistor is supposed to be about 10^{o}∼10² seconds. Therefore there is a problem that a design for the circuits and their adjustment become complicated. In this embodiment the constant-power method, there are three types, namely, (1) an approximately constant-power method supplied with the constant-voltage and the constant-current, (2) a thermistor constant-power control method according to an analogical or digital calculation, and (3) a constant-power driving method supplied with a constant-energy. Each type is explained below.

### (1) The approximately constant-power method supplied with the constant-voltage and the constant-current

A electrical property of the thermistor is approximately shown in next formula (7). 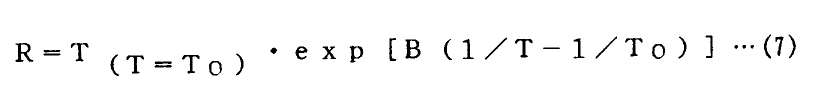
Since a constant value B is generally 3000∼5000 (° /K), a change of a resistance reaches 220% ∼380% according to the the temperature change from 20 to 40°C, therefore, some calculation is required for supplying the constant electric power. On the other hand, when a temperature sensor having little property change due to the temperature is used, it is possible to keep a fluctuation of a power consumption small even with a constant-current (or a constant-voltage).

Diode is supposed as an element which is driven with the constant-current. A forward voltage drop of the diode is about 0.6 ∼0.7V and has a temperature coefficient of about 2 ∼3mV/°C, though it is changed a little due to a forward current, a dispersion caused by production, and so on. Therefore, a fluctuation of the electric power is stayed within ±8 ∼12% when the constant electric power is worked in a temperature range of 20 ∼45°C.

There is an FET (field effect transistor) of Depletion mode (Normally ON) as an element worked with the constant-voltage. For example, a certain higher voltage than a pinch-off voltage is applied to the constant-current circuit with J-FET. At that time, the temperature can be measured because the voltage of the constant-current shows the temperature dependence.

In the whole, this type has characteristics of; ① The circuit design is simple and cheep; ② The temperature sensor costs low; ③ But the constant power driving is not accurate; ④ There are no securities for the dispersion of the element's sensitivity, a secular change, and so on. Especially, for the dispersion of the element's sensitivity, an inspection whether a compensation for correspondence of property is required with one point or two points.

### (2) The constant-power control method by an analog calculation

This is the method of controlling a voltage (or an electric current) so as to keep a product of the current and the voltage constant values, or the method of applying the voltage proportional to the reciprocal of the current (or the current proportional to the reciprocal of the voltage).

Generally, there are problems in the cost, power source voltage, consumed electric power and so on since a method of using a logarithmic and a reciprocal logarithmic amplifier or a variable mutual conductance method is mostly used in analog multiplier (divider). There are also problems that the pair trasistors the property of which is corresponded is required, and so on when composed of discrete parts.

In case where high-speed response is not required, multiplier or divider of integrate type is available to be used. Moreover, it is easy to be composed of the discrete parts in this method. A principle for this case is shown in Fig.6

Namely, when a condition of a switch(SW) is changed from ON to OFF in a circuit arrangement in Fig.6(a), an operational amplifier(A₁) starts integral action, as shown in Fig.6(b). Time T when an output level of a comparator(A₂) reaches high value is expressed in next formula (8), wherein an error of the operational amplifier(A'), switch-on time and so on are ignored for simplification, and an input voltage Vin within reset time is considered to be constant .

$\text{T = C·R (Vref/Vin) (8)}$

When each wave form is so shaped as to have a constant value V_{H} when the output of the comparator(A') is high level, and as to have an earth level (GND level) when low level and is smoothed by a low-pass filter, an output V̅ₒ̅ of the low-pass filter is expressed in next formula (9) when a repetition period of the switch is Tₒ to obtain the output inversely proportional to the input. 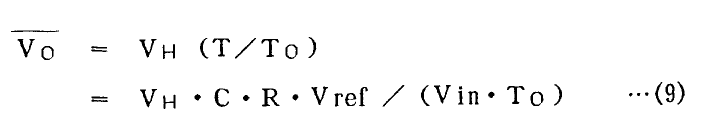
In a thermistor voltage driving circuit, a constant-power can be applied when the thermistor current is input to abovementioned circuit and a thermistor voltage is changed accodring to the output voltage. Also, in this case, the output proportional to a thermistor resistance is obtained when the voltage at the high level of the output from the comparator is proportional to the thermistor voltage.

Further, in the current driving circuit, regulation of the voltage and measuring of the thermistor resistance (conductance) can be done at once in the same process as abovementioned.

### (3) The constant-power driving method by the constant-energy.

This method is substantially disadvantageous in a case using a battery or the like where a power source voltage is low and mono-type since the circuits including the integrator are composed as an inversion amplifier.

Therefore, a method of using a circuit not provided with an active integrator is to be examined. With reference to the charge and discharge of a condenser (C) in the circuit shown in Fig.7(a), the condenser (C) charges through a resistance (r) when a switch (S1) is at ON and a switch (S2) is at OFF. On the contrary, when the switch (S1) is at OFF and the switch (S2) is at ON, the condenser discharges through the resistance (R).

When an end voltage E between both plates of the condenser (C) at the beginning of charging is E₂, the change of voltage E is expressed as shown in Fig.7(b) when E = E₂.

${\text{E = E}}_{\text{o}} {\text{- (E}}_{\text{o}} {\text{-E₂) e}}^{\text{-t/ C·r}} \text{(10)}$

A time t₁ required for charging until the voltage reaches at E₁ is;

${\text{t₁ =C·r·ℓn[(E}}_{\text{o}} {\text{-E₂)/(E}}_{\text{o}} \text{-E₁)] (11)}$

When the switch (S1) is turned to OFF and the switch (S2) is turned to ON at the time the voltage E of the condenser becomes E₁ a discharging cycle starts thereafter, the formula is; 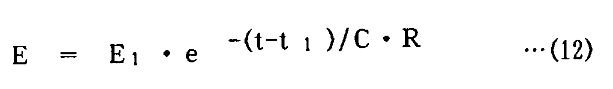
On the other hand, a time t₂ required for discharging until the voltage becomes E₂ is;

$\text{t₂ =C·R·ℓn(E₁/E₂) (13)}$

Then an energy ε the condenser (C) gives to the resistance (R) during one cycle of such charge and discharge is;

$\text{ε = C (E₂² -E₁²)/2 (14)}$

Therefore, when the voltage E₁, E₂ and the capacity of the condenser (C) are all constant, the energy the resistance (R) consumes during a charging and discharging cycle is kept constant. When the charging and discharging cycle is repeated at every certain period ${\text{t}}_{\text{o}} {\text{(t}}_{\text{o}} \text{≧ t₁ + t₂ )}$ , an average consumed power P̅ is given with next formula, and the constant power is available to drive the circuit.

$\overline{\text{P}} {\text{= ε/t}}_{\text{o}} \text{(15)}$

When the resistance R is replaced with the thermistor, the thermistor constant-power driving is available. Also, since discharging time is proportional to the thermistor resistance according to abovementioned formula (13), the thermistor resistance can be measured simultaneously with driving of the constant-power when discharging time is measured. In this case, abovementioned certain period tₒ is limited in ${\text{t}}_{\text{o}} \text{≧ t₁ + t₂}$ , because the source voltage Eₒ is not substantially participated in an action. Moreover, the resistance (r) for limitting a charging current is desirably equipped in order to limit the charging current within an allowable ripple current of the condenser (C) and also in order to lessen an overshoot of the charged voltage caused by a delaying time in a voltage detector, a switcing sensor and so on.

For example, block diagram of circuit for such a constant-power driving method by the constant energy and a detailed circuit arrangement is each shown in Fig.8 and Fig.9. As its outline, the circuit is provided with a charge and discharge controlling part (20) which is composed of the first and the second latches (20a), (20b) (flip-flop) and is arranged so as to start the control of charge and discharge of the condenser by receiving a clock signal from an oscillator (OSC), a charge switch (21) composed of a transistor (Tr1) which charges the condenser (C) by receiving an output signal from the first latch (20a) of the charge and discahrge controlling part (20), a discharge switch (22) composed of a transistor (Tr2) which inversely discharges the condenser (C) by receiving the output signal from the second latch (20b) of the charge and discharge controlling part (20), a condenser voltage comparing part (23) composed of the first and second comparators (23a), (23b) comparing a reference voltage Vref _{H}, Vref _{L} with the voltage of the condenser (C) by both comparators (23a), (23b) to set or reset both latches (20a), (20b) of the charge and discharge controlling part (20), the resistance (r) for limitting the charging current, and the thermistor (R) as a load.

The output of both latches (20a), (20b) is reset at every positive edge of the clock from the oscillator (OSC). Receiving this resetting signal, the first transistor (Tr1) is turned to ON and the second transistor (Tr2) is turned to OFF to start charging for the condenser (C). Hereinafter, when the voltage of the condenser (C) reaches above the predetermined reference voltage Vref _{H}, the output of both latches (20a), (20b) is set by the output of the second comparator (23b). The second transistor (Tr2) is turned to ON and the first transistor (Tr1) is turned to OFF to let the condenser (C) start discharging. And when the condenser (C) discharges down to the predetermined voltage Vref _{L}, the output of the second latch (20b) is reset by the output of the first comparator (23a) to let the condenser (C) interrupt the discharge. After that, this condition is to be retained until next positive edge of the clock from the oscillator (OSC).

For this reason, a load resistance value is derived by measuring dicharging time (an ON acting period of the second trasistor (Tr2)). Also, when an approximately constant-power action is not available by a load fluctuation, power source voltage fluctuation and so on, that situation can be detected by monitoring ON or OFF condition of both transistors (Tr1), (Tr2) (usually, both transisors (Tr1), (Tr2) are in OFF conditions.) through the positive edge of the clock from the oscillator (OSC).

When the highest and lowest limit of the condenser is Vref _{H}, Vref _{L}, and a load resistant value is R, the discharging term t_{dc} is expressed by ;

${\text{t}}_{\text{dc}} {\text{=C·R·ℓn(Vref}}_{\text{H}} {\text{/Vref}}_{\text{L}} \text{) (16)}$

When an oscillating period of the oscillator (OSC) is tₒ, an avarage load supplying power $\overline{\text{P}}$ is; 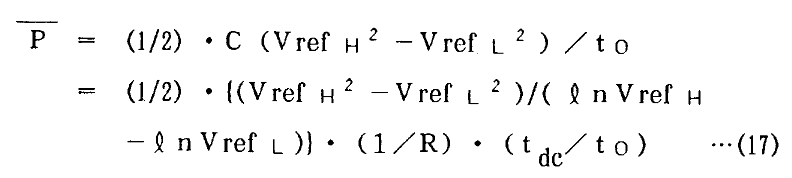
Therefore, an average supplying power is calculated with a duty rate when it is connected with the load resistance a value of which is known. Also, inversely, the supplying power is set rightly without effected by the dispersion of a capacity of the condenser basing on next formula (18) in the manner that the term to is set so as to keep the duty rate constant by connecting the known resistance.

${\text{t}}_{\text{dc}} \text{/t = a·R·} \overline{\text{P}} \text{(18)}$

Wherein,

${\text{a = 2(ℓn Vref}}_{\text{H}} {\text{-ℓn Vref}}_{\text{L}} {\text{)/(Vref}}_{\text{H}} \text{²-Vref²) (19)}$

Moreover, a secular change which inavoidably occurs in condensers of large capacity is easily revised by periodically doing such an operation.

Effects of a concrete embodiment of this invention will now be explained. Progress of the decrease in the output temperature of the temperature detector according to the wind velocity are shown as broken lines in Fig.10 in the case when the temperature detector is self-heated as a bead thermistor the diameter of which is 1.5mm, wherein the wind velocity dependence of the effective temperature drop (shown in Fig.12) is shown as a full line curve. According to this figure, the more a self-heating quantity of the thermistor increase from 5mW toward 15mW, the more the change of the temperature becomes large, and the curve at 10mV is mostly approximated to the curve of the effective temperature drop.

Then, an optimum heat quantity is evaluated by using mean square average value S of balance wherein.

$\text{S=} \overline{\text{(the}} \overline{\text{effective}} \overline{\text{temperature}} \overline{\text{-}} \overline{\text{the}} \overline{\text{output}} \overline{\text{value}} \overline{\text{of}} \overline{\text{the}} \overline{\text{temperature}} \overline{\text{detector)²}} \text{(20)}$

A relation between this mean square average value S and heat quantity of the temperature detector is shown in Fig.11. According to the same figure it is found that a remarkable optimum value exists in the heat quantity, which is neary 10mV in this example.

According to the thermal environment sensor of this invention, the efective temperature considering the air temperature and the wind velocity can be measured with a sensor consisting of single temperature detector and a simple circuit. Especially, it is effective for actualizing control of a comfortable air condition.

## Claims

1. A thermal environment sensor having means(3) for detecting temperature comprising a single temperature detector (1) and producing an output representative of the detected temperature, heating means(4) for heating the temperature detector(3) with a predetermined power and electric power supply means(5) connected to the heating means(4) for supplying the heating means(4) with electric power corresponding to the predetermined power characterized in that said means for detecting temperature has, when heated by a predetermined constant power from the heating means(4), a convective heat transfer coefficient giving the temperature detector(3) a wind velocity dependent temperature drop characteristic in close conformity with the effective temperature drop felt by a human body due to the wind velocity, and in that a temperature estimating circuit(6) is connected to the temperature detector(3) for correcting the output of the temperature detector by a predetermined constant temperature difference for thereby obtaining the effective temperature felt by a human body due to wind velocity.

2. The thermal environment sensor as claimed in Claim 1, wherein said temperature detector(3) also includes said heating means(4) being self-heated by said constant electric power supplied by said electric power supplying means(5).

3. The thermal environment sensor as claimed in Claim 1 or Claim 2, wherein said temperature detector(3) is heated intermittently to estimate said effective temperature(Tv) and an absolute value of the wind velocity.

4. The thermal environment sensor as claimed in Claim 1 or Claim 2, wherein said temperature estimating circuit(6) is arranged so that the operation of an air conditioner can be controlled according to the output signal of said temperature estimating circuit (6).

## Patentansprüche

1. Thermischer Sensor
mit einer Vorrichtung (1) zur Temperaturmessung, die einen einzelnen Temperaturfühler (3) aufweist und eine Ausgangsgröße erzeugt, die der gemessenen Temperatur entspricht,
mit einer Heizvorrichtung (4) zum Beheizen des Temperaturfühlers (3) mit einer vorbestimmten Heizleistung,
mit einer elektrischen Stromversorgung (5), die mit der Heizvorrichtung (4) verbunden ist, um die Heizvorrichtung (4) mit einer elektrischen Leistung zu versorgen, die der vorbestimmten Heizleistung entspricht,
dadurch gekennzeichnet,
daß die Vorrichtung zur Temperaturmessung dann, wenn sie mit einer vorbestimmten konstanten Heizleistung von der Heizvorrichtung (4) beheizt ist, einen Konvektionswärmeübergangskoeffizienten aufweist, der dem Temperaturfühler (3) eine windgeschwindigkeitsabhängige Temperaturabfallcharakteristik verleiht, die in enger Übereinstimmung mit dem tatsächlichen Temperaturabfall ist, den ein menschlicher Körper durch die Windgeschwindigkeit empfindet,
und daß eine Schaltung (6) zum Berechnen der Temperatur mit dem Temperaturfühler (3) verbunden ist, der die Ausgangsgröße des Temperaturfühlers um eine vorbestimmte konstante Temperaturdifferenz korrigiert, um so die tatsächliche Temperatur zu erhalten, die ein der Windgeschwindigkeit ausgesetzter menschlicher Körper empfindet.

2. Thermischer Sensor nach Anspruch 1,
bei dem der Temperaturfühler (3) auch die Heizvorrichtung (4) mit einschließt und sich selbst beheizt mit einer konstanten elektrischen Leistung, die von der elektrischen Stromversorgung (5) zugeführt wird.

3. Thermischer Sensor nach Anspruch 1 oder Anspruch 2,
bei dem der Temperaturfühler (3) intermittierend beheizt wird, um die tatsächliche Temperatur (Tv) und einen absoluten Wert der Windgeschwindigkeit zu berechnen.

4. Thermischer Sensor nach Anspruch 1 oder Anspruch 2,
bei dem die Schaltung (6) zum Berechnen der Temperatur dafür vorgesehen ist, den Betrieb eines Klimagerätes entsprechend dem Ausgangssignal der Schaltung (6) zur Berechnung der Temperatur zu steuern.

## Revendications

1. Détecteur thermique de l'environnement, comportant des moyens (3) pour détecter la température, comprenant un détecteur unique de température (1), et produire un signal de sortie représentatif de la température détectée, des moyens de chauffage (4) pour chauffer le détecteur de température (3) avec une puissance prédéterminée et des moyens d'alimentation en énergie électrique (5) reliés aux moyens de chauffage (4) en vue de fournir aux moyens de chauffage (4) la puissance électrique correspondant à la puissance prédéterminée, caractérisé en ce que lesdits pour détecter la température présentent, lorsqu'ils sont chauffés par une puissance constante prédéterminée provenant des moyens de chauffage (4), un coefficient de transfert de chaleur par convection donnant au détecteur de température (3) une caractéristique de chute de température en fonction de la vitesse du vent en étroite conformité avec la chute de température effective ressentie par un corps humain du fait de la vitesse du vent et en ce qu'un circuit (6) d'estimation de température est branché sur le détecteur de température (3) pour corriger le signal de sortie du détecteur de la température par une différence de température constante prédéterminée afin d'obtenir de ce fait la température effective ressentie par un corps humain du fait de la vitesse du vent.

2. Détecteur thermique de l'environnement selon la revendication 1, dans lequel ledit détecteur de température (3) comprend également lesdits moyens de chauffage (4), en étant chauffé par lui-même par ladite puissance électrique constante fournie par lesdits moyens d'alimentation en énergie électrique.

3. Détecteur thermique de l'environnement selon la revendication 1 ou 2, dans lequel ledit détecteur de température (3) est chauffé de manière intermittente pour estimer ladite température réelle (Tv) et une valeur absolue de la vitesse du vent.

4. Détecteur thermique de l'environnement selon la revendication 1 ou 2, dans lequel ledit circuit d'estimation de la température (6) est disposé de telle manière que l'on peut commander le fonctionnement d'un conditionneur d'air en fonction du signal de sortie dudit circuit d'estimation de température (6).
